# EUROPÄISCHE PATENTSCHRIFT

(11) **EP 2 086 824 B1**
(45) Veröffentlichungstag und Bekanntmachung des Hinweises auf die Patenterteilung: **30.05.2012**
(21) Anmeldenummer: 07817776.3
(22) Anmeldetag: 29.10.2007
(51) Int. Cl.: B62K 5/06, B62K 5/08

(54) **FAHRZEUG MIT DREI RÄDERN**
VEHICLE WITH THREE WHEELS
VÉHICULE À TROIS ROUES

(30) Priorität: 30.10.2006 DE 102006052041; 18.04.2007 DE 102007019026
(43) Veröffentlichungstag der Anmeldung: 12.08.2009
(73) Patentinhaber: Steinhilber, Hektor, 12207 Berlin (DE); Zehentmeier, Peter, 84307 Eggenfelden (DE)
(72) Erfinder: Steinhilber, Hektor, 12207 Berlin (DE); Zehentmeier, Peter, 84307 Eggenfelden (DE)
(86) Internationale Anmeldenummer: PCT/DE2007/001988
(87) Internationale Veröffentlichungsnummer: WO 2008/052539

(56) Entgegenhaltungen:
- EP-A- 0 606 191
- WO-A-97/27071
- WO-A-2006/008569
- FR-A- 2 469 342
- US-A- 3 237 961
- US-A- 4 887 829

## Beschreibung

Die Erfindung betrifft ein Fahrzeug mit drei Rädern, entsprechend dem Oberbegriff des Patentanspruchs 1.

Aus US 3,237,961 ist ein Dreirad bekannt, dessen gegenläufig bewegliche Hinterradschwingen vom Fahrer steuerbar sind, weil ihre Bewegung mit zwei Steuerstangen an die Drehbewegung des Lenkers gekoppelt ist. Das Fahrzeug ist jedoch als Kinderdreirad konzipiert. Bei schneller Kurvenfahrt würden am kurvenäußeren Rad große Kräfte auftreten, die vom Fahrer am Lenker kompensiert werden müssten. Um den Fahrer in die Lage zu versetzen, entsprechende Hebelkräfte aufzubringen, müsste der Lenker extrem breit oder mit einer hydraulischen Lenkhilfe verbunden sein.

Aus US 4,887,829 ist ein Dreirad bekannt, dessen Hinterräder ebenfalls an gegenläufig beweglichen Hinterradschwingen geführt sind. Das Dreirad lenkt wie ein Einspurfahrzeug durch einen Lenkimpuls am Lenker in die Kurve ein. Die gegenläufige Bewegung der Hinterradschwingen wird durch eine am Fahrzeugrahmen gelagerte Wippe ermöglicht, die als Ausgleichsvorrichtung fungiert. In Relation zum Fahrzeugrahmen sind die Hinterradschwingen frei beweglich und belasten beide Hinterräder tendenziell gleich, so als würde das Fahrzeug statt zwei Rädern nur ein einzelnes, sehr breites Hinterrad aufweisen. Daher kann der Fahrer den Fliehkräften bei schneller werdender Kurvenfahrt nur entgegenwirken, indem er sich wie mit einem Einspurfahrzeug in die Kurve legt, bis die Schräglagengrenze erreicht ist. Wenn sich der Fahrer abrupt in eine enge Kurve legt, kippt die Ausgleichsvorrichtung auch wegen ihrer freien Beweglichkeit sofort zur kurvenäußeren Seite hin ab, was dazu führt, dass das kurveninnere Rad bereits von der Fahrbahn abhebt, obwohl die Schräglagengrenze noch nicht erreicht ist. Sofern ein mechanischer Anschlag die Funktion der Ausgleichsvorrichtung begrenzt, tritt ein ähnlich instabiler Fahrzustand ein, wenn das kurvenäußere Rad den Bodenkontakt verliert, während das Fahrzeug über das kurveninnere Rad noch weiter in Schräglage geneigt wird. Die an sich gewünschte Erhöhung der Kurvengeschwindigkeit, durch eine Verlagerung des resultierenden Vektors aus Gewichtskraft und Fliehkraft zum Reifenaufstandspunkt des kurvenäußeren Rads hin, ist wegen der fehlenden Steuerung der Hinterradschwingen nur mit akrobatischen Fähigkeiten praktikabel. Ebenso ist das Einlenken durch Körperverlagerung ohne Lenkimpuls wegen der fehlenden Mitlenkung der Hinterräder nicht möglich.

Aus DE 694 02 087 T2 ist ein schnelles Dreirad bekannt, dessen gegenläufig bewegliche Hinterradschwingen, in ähnlicher Form wie bei der vorgenannten Patentschrift, über Steuerstangen mit einer am Fahrzeugrahmen gelagerten Wippe verbunden sind. Die Wippe fungiert ebenfalls als freie pendelnde Ausgleichsvorrichtung, weshalb sich die Hinterräder unabhängig von der Schräglage des Fahrzeugrahmens frei zur Fahrbahn orientieren. Somit ist eine kontrollierte Steuerung der Schwingenbewegung nicht möglich. Das Fahrgefühl entspricht daher dem eines "kippeligen" Einspurfahrzeugs.

In DE 44 23 859 A1 werden verschiedene Ausgleichsvorrichtungen vorgestellt, mit denen sich die Hinterräder ebenfalls unabhängig von der Schräglage des Fahrzeugrahmens frei zur Fahrbahn orientieren. Auch hier ist keine kontrollierte Steuerung der Schwingenbewegung möglich.

Aus WO 86/02897 ist zudem ein Dreirad bekannt, bei dem Fahrersitz und Vorderradgabel starr miteinander verbunden sind. Die Lenkung erfolgt hier teilweise durch Verlagerung des Körpergewichts, da der Lenkkopf unterhalb des Fahrersitzes angeordnet ist. Der Fahrer sichert die horizontale Lage des Fahrzeugs durch Abstützung der Hände auf zwei seitlich angeordneten Handgriffen. Die Lenkachse ist in Relation zu den Hinterrädern jedoch frei beweglich, wodurch das Kurveninnere Rad bei schneller Kurvenfahrt den Kontakt zur Fahrbahn tendenziell verliert. Damit das Fahrzeug nicht ständig über das Kurvenäußere Rad kippt, ist der Fahrersitz extrem niedrig angeordnet. Eine Nutzung im öffentlichen Straßenverkehr ist wegen der mangelnden Übersicht und des unsicheren Fahrgefühls nur eingeschränkt möglich.

In WO 2006/008569 A1 wird ein ähnliches Liegedreirad vorgestellt, bei dem die Erhaltung der neutralen Ausgangslage nicht allein über die Handgriffe, sondern auch durch unterstützende Drehfedern am Lenkkopf erreicht wird. Das Fahrzeug weist ansonsten aber die gleichen Nachteile der vorstehend erwähnten Erfindung auf und eignet sich ebenfalls nur eingeschränkt für die Nutzung im allgemeinen Straßenverkehr. In WO 2006/008569 A1 wird ein Liegedreirad vorgestellt, bei dem die Erhaltung der neutralen Ausgangslage des Fahrzeugs nicht allein über Hand-oder Lenkgriffe erreicht wird, sondern auch durch unterstützende Drehfedern am Lenkkopf. Das Fahrzeug eignet sich aber wegen der fehlenden Übersicht und der eingeschränkten Lenkmöglichkeit nur bedingt für die Nutzung im allgemeinen Straßenverkehr.

Darüber hinaus sind aus dem Stand der Technik verschiedene computergesteuerte, hydraulische Neigesysteme für Dreiräder bekannt. Entsprechend ausgerüstete Fahrzeuge ermöglichen zwar eine Verlagerung des resultierenden Vektors aus Gewichtskraft und Fliehkraft zum Reifenaufstandspunkt des kurvenäußeren Rads hin, bis das Fahrzeug in Schräglage driftet oder nach außen kippt. Aufgrund ihrer aufwändigen Konstruktion sind diese Systeme jedoch nicht für leichte, kostengünstige Fahrzeuge, die mit Muskelkraft oder Elektromotoren betrieben werden, geeignet.

Der Erfindung liegt deshalb die Aufgabe zugrunde, ein leichtes Dreirad mit übersichtlicher Sitzposition, energiesparendem Antrieb und steuerbarer Neigetechnik zu konzipieren, mit dem auch durch Verlagerung des Körpergewichts eine Erhöhung der Kurvengeschwindigkeit in Schräglage möglich ist. Es soll als Gebrauchs- und Sportfahrzeug nutzbar sein und im Stand oder bei Geradeausfahrt selbsttätig eine neutrale, horizontale Ausgangsposition einnehmen.

Erfindungsgemäß wird die Aufgabe durch ein Fahrzeug mit drei Rädern genutzt, das die Merkmale des Patentanspruchs 1 aufweist.

Kern der Erfindung ist demnach die Idee, dass am Fahrzeugrahmen unterhalb des Fahrersitzes ein Lenkkopf mit starren Mitnehmern angeordnet ist, der die Neigung des Fahrzeugrahmens mit Steuerelementen an die gegenläufige Bewegung der Hinterradschwingen koppelt, um die Fahrzeugneigung zu steuern und eine Lenkung der Hinterräder zu bewirken, und dass die Drehachse der Hinterradschwingen zwischen den Aufnahmelaschen der Steuerstangen und den Hinterradaufnahmen angeordnet ist, wodurch die abwärts gerichtete seitliche Neigung des Fahrzeugrahmens zu einer Aufwärtsbewegung des kurveninneren Hinterrads führt, und dass die Hinterradschwingen von der Drehachse der Hinterradschwingen über die Aufnahmelaschen der Steuerstangen hinaus, mit einem Fußhebel verlängert sind, um Fußrasten aufzunehmen, mit denen die Steuerung der Auf- und Abwärtsbewegung der Hinterradschwingen unterstützt werden kann, und dass am Fahrzeugrahmen im Bereich hinter der vertikalen Lenkachse des lenkbaren Vorderradträgers eine Umlenkrolle angeordnet ist, mit der der Kettentrieb eines manuell angetriebenen Vorderrads in Fahrtrichtung nach hinten umgelenkt wird, um eine tiefe Position des Tretlagers zu erreichen.

Das dreirädrige Fahrzeug umfasst einem Fahrzeugrahmen, einen Fahrersitz und zwei gegenläufig bewegliche Hinterradschwingen. Am Fahrzeugrahmen ist im Bereich des Fahrersitzes ein Lenkkopf mit starren Mitnehmern angeordnet ist, der die Neigung des Fahrzeugrahmens mit Steuerelementen an die gegenläufige Bewegung der Hinterradschwingen koppelt. Die Fahrzeugneigung ist somit steuerbar und somit eine Lenkung der Hinterräder bewirkbar.

Eine Drehachse der gegenläufig beweglichen Hinterradschwingen ist zwischen Aufnahmelaschen von Steuerstangen und Hinterradaufnahmen angeordnet. Damit ist eine seitliche Neigung des Fahrzeugrahmens bewirkbar, die zu einer Aufwärtsbewegung des jeweils kurveninneren Hinterrads führt. Die Hinterradschwingen sind von der Drehachse über die Aufnahmelaschen der Steuerstangen hinaus, mit einem Fußhebel verlängert, um Fußrasten aufzunehmen, mit denen die Steuerung der Auf- und Abwärtsbewegung der Hinterradschwingen unterstützbar ist.

Am Fahrzeugrahmen ist im Bereich hinter einer vertikalen Lenkachse eines lenkbaren Vorderradträgers eine Umlenkrolle angeordnet, mit der der Kettentrieb eines manuell angetriebenen Vorderrads in Fahrtrichtung nach hinten umlenkbar ist, um eine tiefe Position des Tretlagers zu erreichen.

An den Hinterradschwingen sind jeweils Trittbretter mit Rückholfedern angeordnet, welche mittels Kettenzügen und spiralförmigen Kettenrädern die Hinterräder antreiben. An dem im Bereich des Fahrersitzes angeordneten Lenkkopf sind Rückholfedern angeordnet, über welche die horizontale Lage des Fahrzeugs stabilisierbar ist, indem sie die Hinterradschwinge in eine ausgeglichene Mittellage zwingen.

Zwischen dem im Bereich des Fahrersitzes angeordneten Lenkkopf und dem Fahrzeugrahmen ist ein Zentralfederbein gelenkig angeordnet. Der im Bereich des Fahrersitzes angeordnete Lenkkopf ist mit einem Hydraulikzylinder versehen, mit dem die gegenläufige Bewegung der Hinterradschwingen zusätzlich steuerbar ist. An dem im Bereich des Fahrersitzes angeordneten Lenkkopf ist eine Bremse vorgesehen, mit der seine Drehbewegung blockierbar ist.

An den gegenläufig beweglichen Hinterradschwingen und am Vorderradträger sind Aufnahmebohrungen vorgesehen, an welchen Schneeketten oder Kufen montierbar sind. Am Fahrzeugrahmen kann ein dachförmiger Wetterschutz angeordnet sein. Der Lenkkopf kann unterhalb des Fahrersitzes vorgesehen sein, was ein Ausführungsbeispiel darstellt und nicht als Beschränkung der Erfindung aufgefasst werden soll.

Einzelheiten der Erfindung werden in der nachfolgenden Beschreibung der bevorzugten Ausführungsbeispiele anhand der Zeichnungen erläutert.

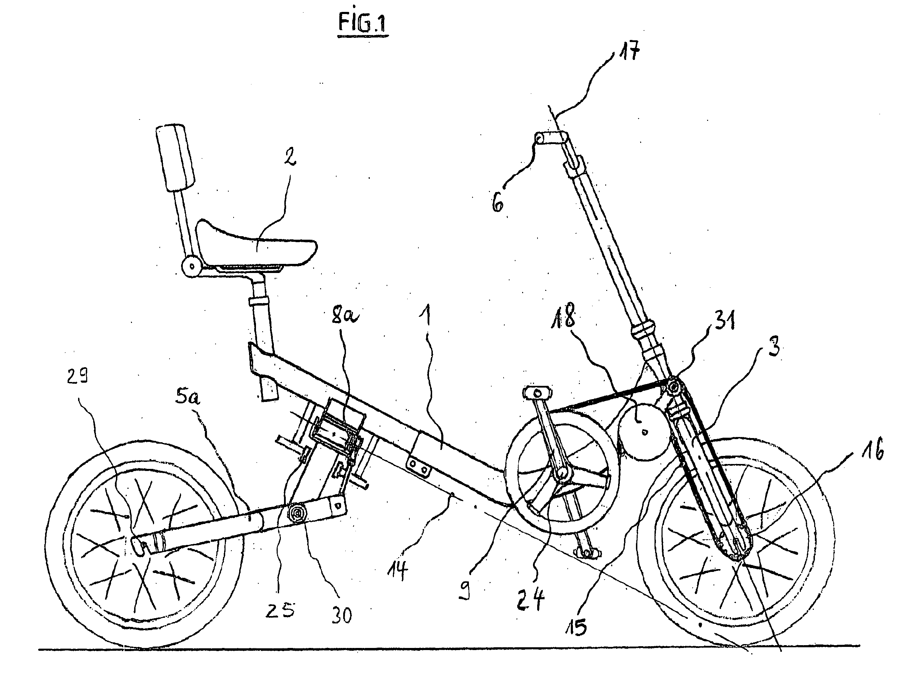

Fig. 1 Seitenansicht eines Dreirads mit manuellem Vorderradantrieb

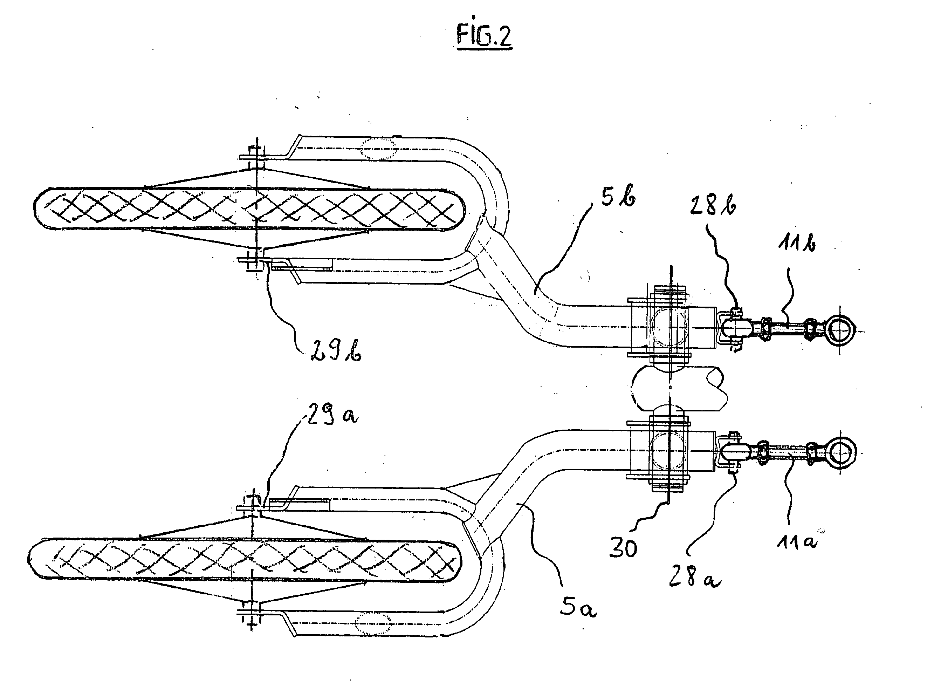

Fig. 2 Draufsicht auf die Hinterradschwingen eine Dreirads
Fig. 3 Ansicht eines Dreirads in Schräglage von hinten
Fig. 4 Seitenansicht eines Dreirads mit Wetterschutz
Fig. 5 Seitenansicht eines mit Ketten und Kufen umgebauten Dreirads
Fig. 6 Seitenansicht eines Kinderdreirads mit Tretkurbel im Vorderrad
Fig. 7 Draufsicht eines Kinderdreirads mit Tretkurbel im Vorderrad

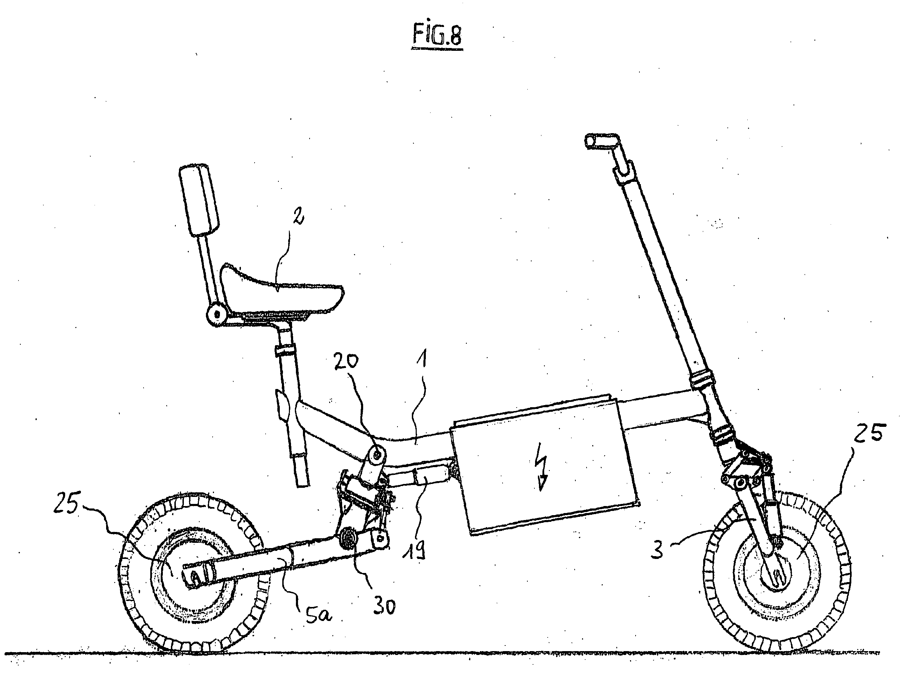

Fig. 8 Seitenansicht eines Dreirads mit Vollfederung und Elektroantrieb
Fig. 9 Seitenansicht eines Dreirads mit hydraulischer Pedalsteuerung
Fig. 10 Seitenansicht eines Dreirads mit hydraulischer Lenkersteuerung

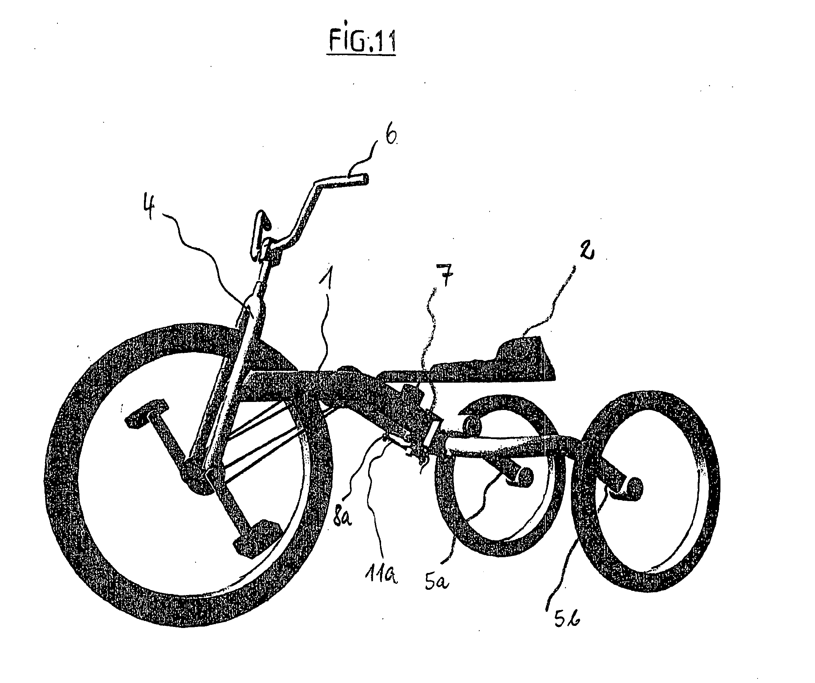

Fig. 11 Isometrische Seitenansicht eines Dreirads mit starrem Vorderradträger

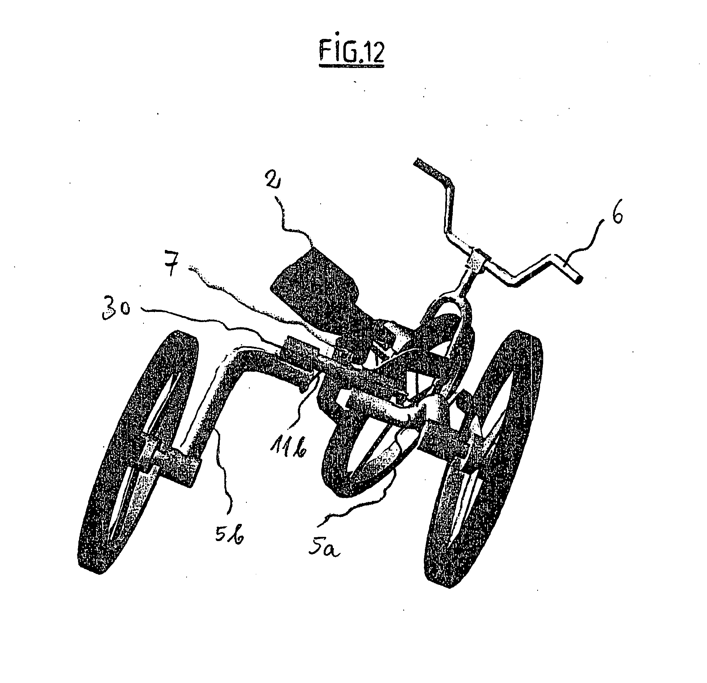

Fig. 12 Isometrische Ansicht eines Dreirads mit starrem Vorderradträger von hinten
Fig. 13 Seitenansicht eines Dreirads mit Vollverkleidung
Fig. 14 Seitenansicht eines Dreirads mit starren Fußhebeln
Fig. 15 Seitenansicht eines Dreirads mit gefederten Fußhebeln
Fig. 16 Seitenansicht eines Tandemfahrzeugs mit Stepper

Das Dreirad weist ein Vorderrad und zwei Räder an gegenläufig beweglichen Hinterradschwingen 5a, 5b, sowie einen am Fahrzeugrahmen 1 befestigten Fahrersitz 2 und einen Lenker 6 auf. Es kann als Sportgerät mit einem starren Vorderradträger 4, der Teil des Fahrzeugrahmens 1 ist, ausgeführt sein. Mit einem lenkbaren Vorderradträger 3, der beispielsweise als Vorderradgabel ausgeführt sein kann, ist es auch als herkömmliches Straßenfahrzeug nutzbar, mit dem der Kurvenradius und die Fahrzeugneigung unabhängig voneinander steuerbar sind.

Die Besonderheit des neuen Fahrzeugs liegt darin, dass der Fahrzeugrahmen 1 unterhalb des Fahrersitzes 2 an einem Lenkkopf 7 drehbar gelagert ist und die Hinterräder einlenken, sobald sich das Fahrzeug zur Seite neigt. Zusätzlich sind im Bereich des Lenkkopfs 7 Mitnehmer 8a, 8b angeordnet, an denen Steuerstangen 11 a, 11b befestigt sind, die die Drehbewegung des Fahrzeugrahmens 1 an die gegenläufige Bewegung der Hinterradschwingen 5a, 5b koppeln. Die Drehachse 30 der Hinterradschwingen 5a, 5b ist zwischen den Aufnahmelaschen 28a, 28b der Steuerstangen 11a, 11b und den Hinterradaufnahmen 29a, 29b angeordnet. Deshalb bewegt sich beispielsweise das rechte Hinterrad nach oben, wenn sich die rechte Steuerstange 11 a nach unten bewegt.

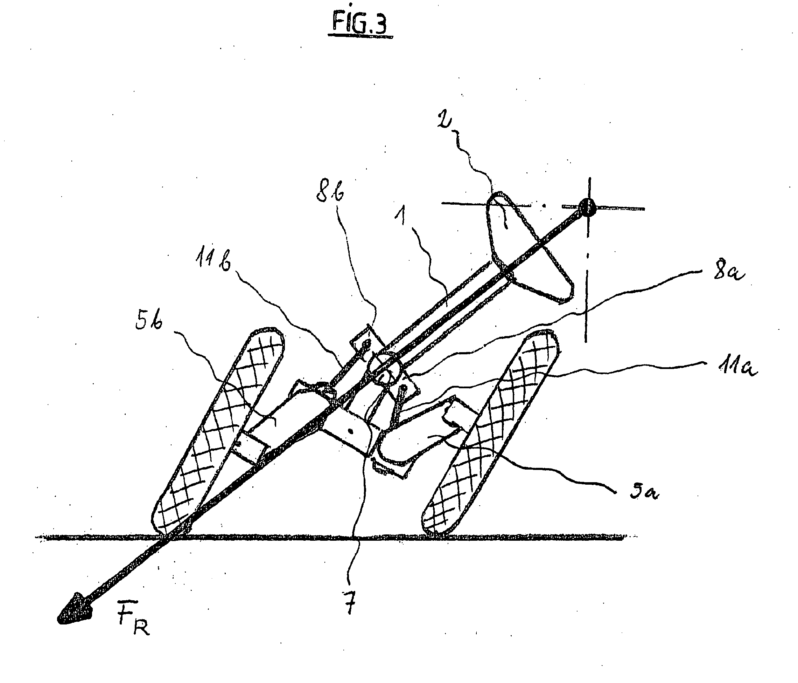

Da der Fahrersitz 2 oberhalb des Lenkkopfs 7 angeordnet ist, ergibt sich mit dem Fahrzeugrahmen 1 ein Hebel, den der Fahrer steuert, indem er mit seinem Körpergewicht die horizontale Lage des Fahrersitzes 2 und folglich auch des Fahrzeugrahmens 1 verändert. Solange dieser Hebel, wie in Fig. 3 gezeigt, zur kurveninneren Seite hin in Position gehalten wird, verhindern die starren Mitnehmer 8a, 8b dass sich die Hinterradschwingen 5a, 5b weiter gegenläufig bewegen. Das Fahrzeug kann sich also weder selbsttätig aus der Schräglage aufrichten, noch können die Räder zur kurvenäußeren Seite hin abkippen. Folglich verläuft der resultierende Vektor aus Gewichtskraft und Fliehkraft "FR" bei größer werdender Kurvengeschwindigkeit durch den Reifenaufstandspunkt des kurvenäußeren Hinterrads. Da die Neigetechnik mit geeigneten Anschlägen so ausgelegt ist, dass der Fahrzeugrahmen 1 mit dem Vorderrad nicht stärker als 45° zur Seite geneigt werden kann, untersteuert das Fahrzeug im Extremfall, obwohl die Hinterräder weniger stark geneigt sind als das Vorderrad.

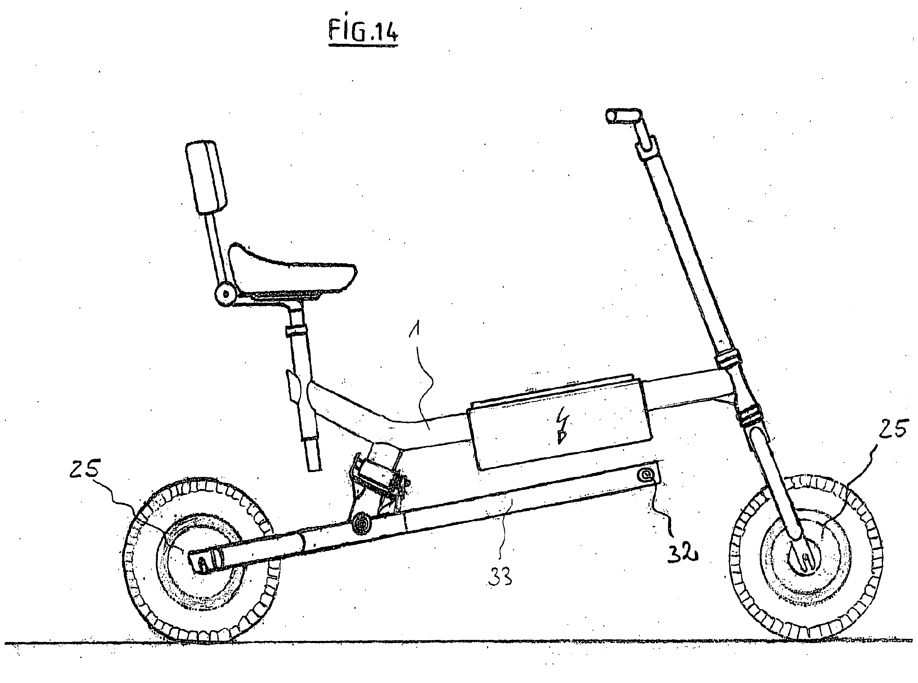

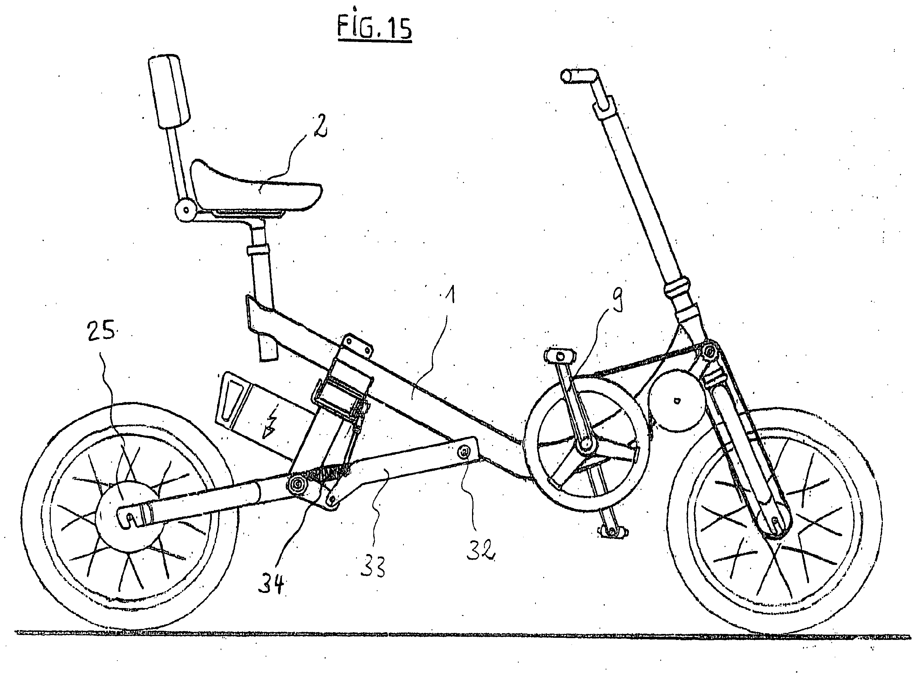

Je größer dabei die Kurvengeschwindigkeit wird, desto kräftiger muss sich der Fahrer am Lenker 6 festhalten und den Körper auf dem Fahrersitz 2 zur kurveninneren Seite hin verlagern, um den Fahrzeugrahmen 1 dort hin zu drücken und die gegenläufige Bewegung der Hinterradschwingen 5a, 5b zu verhindern. Letztendlich kann er aber nur wie der Beifahrer eines Motorradgespanns eine Gewichtskraft auf den Fahrzeugrahmen 1 ausüben. Um die Kurvengeschwindigkeit an schnellen Elektrofahrzeugen, die ohne Tretkurbeln 9 ausgeführt sind oder an Hybridfahrzeugen, die sowohl Tretkurbeln 9 als auch elektrische Nabenmotore 25 aufweisen, weiter erhöhen zu können, lässt sich die Steuerung der Hinterradschwingen 5a, 5b mit mechanischen Fußhebeln unterstützen, wie in Fig. 14 und 15 dargestellt. Hierzu werden die Hinterradschwingen 5a, 5b über die Aufnahmelaschen 28a, 28b der Steuerstangen 11 a, 11 b hinaus, mit einem Fußhebel 33a, 33b verlängert, an dessen Ende Fußrasten 32a, 32b angeordnet sind. Statt den Fahrzeugrahmen 1 nur durch das Körpergewicht in der gewünschten Position zu halten, kann sich der Fahrer nun auch am Lenker 6 festhalten und den Fußhebel 33a, 33b auf der kurveninneren Seite kraftvoll nach unten drücken. Solange der Fahrer die Spannung zwischen Lenker 2 und Fußrasten 32a, 32b aufrecht hält, können sich die Hinterradschwingen 5a, 5b nicht gegenläufig bewegen, selbst wenn das Körpergewicht des Fahrers ungünstig verlagert wird. Je nach bevorzugter Fahrweise, können die Fußhebel 33a, 33b auch mit einem Doppelgelenk ausgeführt sein, in welchem zwei Zahnräder kämmen, wodurch ihre Bewegungsrichtung umgekehrt wird und der Fahrer an der kurvenäußeren Seite nach unten drückt. Stoßartige Belastungen, die beispielsweise auf unebenem Gelände wirken, können mit Federn 34a, 34b an den Fußhebeln 33a, 33b gedämpft werden. Dies ist besonders bei Sportfahrzeugen sinnvoll, auf denen sich der Fahrer während der Kurvenfahrt aus dem Fahrersitz 2 erhebt, um mehr Druck auf die Fußrasten 32a, 32b bringen zu können.

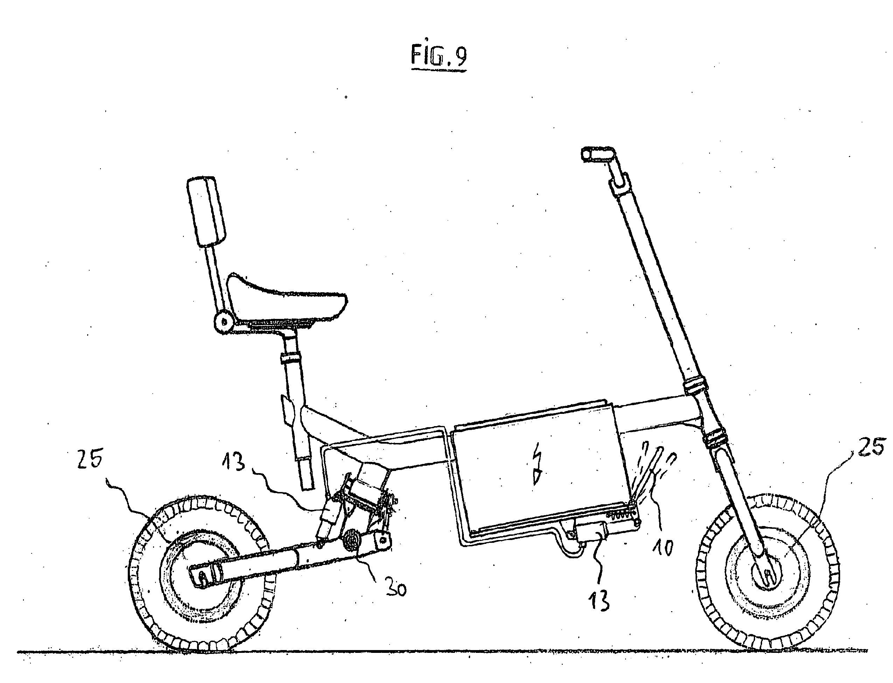

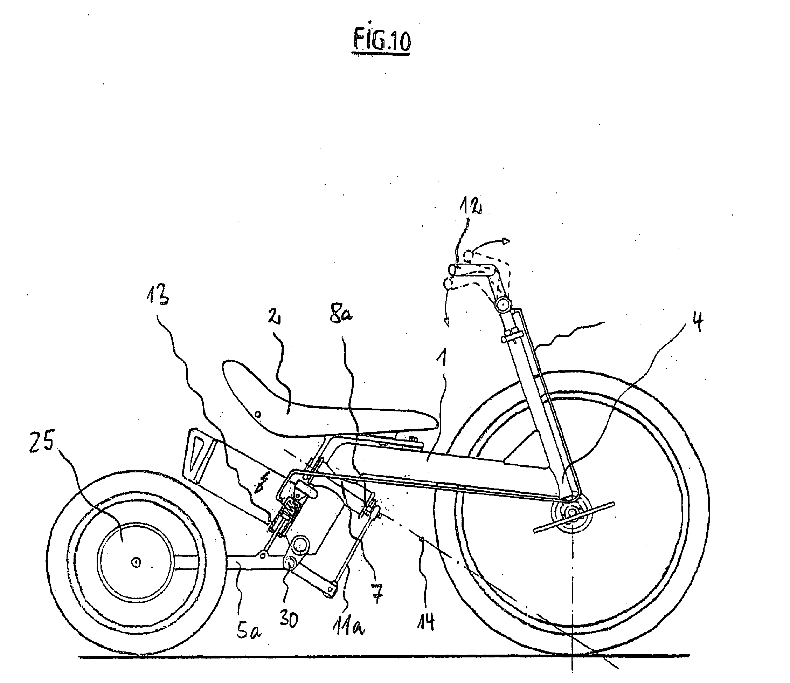

Grundsätzlich kann auch mit hydraulischer Untersetzung an Fußpedalen 10 oder Lenkhebeln 12, wie in Fig. 9 und 10 gezeigt, zusätzlich auf die Hinterradschwingen 5a, 5b gedrückt werden. Hierfür sind nicht zwingend Hydraulikaggregate erforderlich, da Hydraulikzylinder 13 mit unterschiedlich großen Durchmessern in vielen Fällen ausreichen. Statt hydraulischer Elemente sind ebenso elektrische Stellantriebe denkbar.

Das neue Dreirad ist mit manuellem Kettenantrieb gut für Reha-Zwecke geeignet. Zum Training des Balancegefühls wird der unter dem Fahrersitz 2 angeordnete Lenkkopf 7 mit einer Bremse 25 blockiert, die beispielsweise als hydraulische Felgenbremse ausgeführt sein kann. Im blockierten Zustand verhält sich das Fahrzeug wie ein starres Dreirad. Sobald das kritische Anfahren überwunden ist und das Fahrzeug bei schneller werdender Fahrt durch die Kreiselkräfte der Räder stabilisiert wird, kann der Fahrer den Bremshebel lösen. Obwohl die horizontale Ausgangslage noch durch die Rückholfedern 18 unterstützt wird, ergibt sich bei der folgenden Geradeausfahrt ein Fahrgefühl ähnlich wie mit einem herkömmlichen Fahrrad.

Reine Sportfahrzeuge mit starrem Vorderradträger 4 bieten dem Fahrer durch die Zwangssteuerung von Lenkung und Neigung eine sehr dynamische Kurvenfahrt, die als "Swing" bezeichnet werden kann. Der Winkel zwischen der Lenkachse 14 des unter dem Fahrersitz angeordneten Lenkkopfs 7 und der Fahrbahn beträgt hier vorzugsweise 25° bis 45°. Bei Fahrzeugen mit lenkbarem Vorderradträger 3 sind hier, abhängig von der maximal erreichbaren Fahrgeschwindigkeit, 3° bis 25° Grad ausreichend, weil der Kurvenradius mit dem lenkbaren Vorderradträger 3 unabhängig von der Fahrzeugneigung korrigiert werden kann.

Vor allem bei langsameren Fahrzeugen mit manuellem Kettenantrieb kommt der Hinterradlenkung eine große Bedeutung zu, da hier aus Kostengründen nicht die beiden Hinterräder, sondern das Vorderrad angetrieben werden muss. Um den negativen Einfluss, den das Drehmoment der Antriebskette auf die Lenkung ausübt, zu verringern, sollte das unter Last stehende Kettentrum 15 von der Vorderradnabe 16 aus zu einem Punkt am Fahrzeugrahmen 1 geführt werden, der möglichst nahe an der vertikalen Lenkachse 17 des lenkbaren Vorderradträgers 3 liegt. Weil beim Lenken schnell eine Berührung von Kette und Reifen eintritt, ist der Lenkeinschlag bei den bekannten Fahrrädern mit Frontantrieb stark eingeschränkt. Beim neuen Dreirad aber ergibt sich durch das Mitlenken der Hinterräder trotzdem ein kleiner Wendekreis.

Auch der Umlenkung des Kettentriebs kommt eine besondere Bedeutung zu. Bei einem manuellen Vorderradantrieb muss der Fahrer üblicherweise eine mehr oder weniger liegende Sitzposition einnehmen, um die Pedale zu erreichen, weil das Tretlager oberhalb des Vorderrads angeordnet ist. Damit am neuen Dreirad eine sitzende Position bei ausreichender Traktion des Vorderrads und geringer Überschlagsneigung beim Bremsen mit der Vorderradbremse möglich wird, ist eine Umlenkrolle 18 am Fahrzeugrahmen 1 im Bereich hinter der vertikalen Lenkachse 17 des lenkbaren Vorderradträgers 3 vorgesehen. Zusammen mit einem günstig angeordneten Kettenspanner 31, kann das unter Last stehende Kettentrum 15 von der Vorderradnabe 16 aus parallel zur vertikalen Lenkachse 17 des lenkbaren Vorderradträgers 3 nach oben zum Fahrzeugrahmen 1 und von dort hinunter in eine tiefe, ergonomisch günstige Position zum Zahnkranz der Tretkurbel 9 und wieder zurück geführt werden, ohne nennenswerte Lasteinflüsse auf die Lenkung auszuüben.

Damit das Fahrzeug selbsttätig eine horizontale Ausgangsposition einnimmt, können zwischen dem unter dem Fahrersitz 2 angeordneten Lenkkopf 7 und den Hinterradschwingen 5a, 5b Rückholfedern 18a, 18b angeordnet sein. Sie drücken mit gleicher Kraft auf beide Hinterradschwingen 5a, 5b und zwingen sie tendenziell in eine ausgeglichene Position. Dieselbe Funktion ergibt sich, wenn im Lenkkopf 7 eine Drehfeder oder ein Torsionsstab integriert ist.

Die Federung der gegenläufig beweglichen Hinterradschwingen 5a, 5b kann über eine Zentralfederbein 19 erfolgen. Hierzu ist der Lenkkopf 7 zusätzlich an einem Drehgelenk 20 das quer zu Fahrtrichtung angeordnet ist, beweglich gelagert und mit dem Zentralfederbein 19, welches beispielsweise mit einer Zugfeder ausgerüstet ist, verbunden.

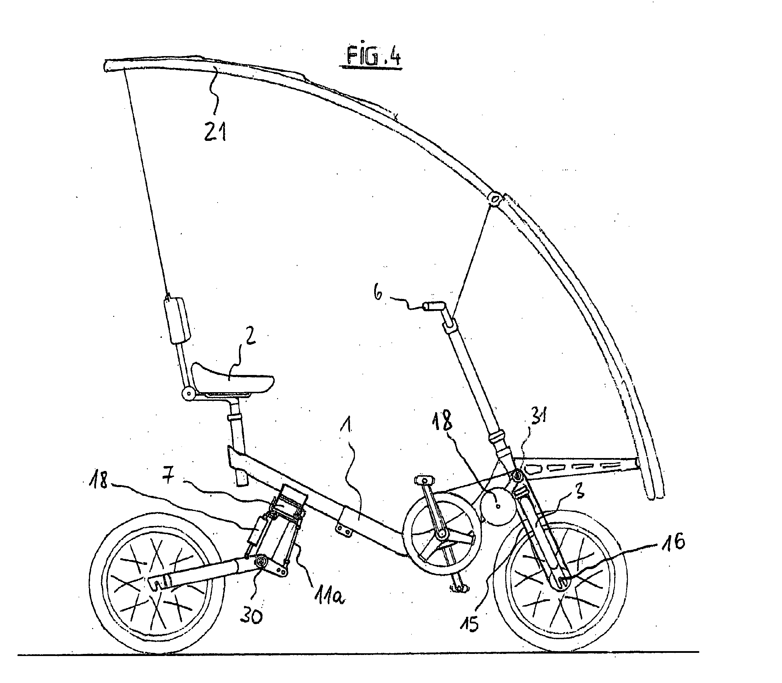

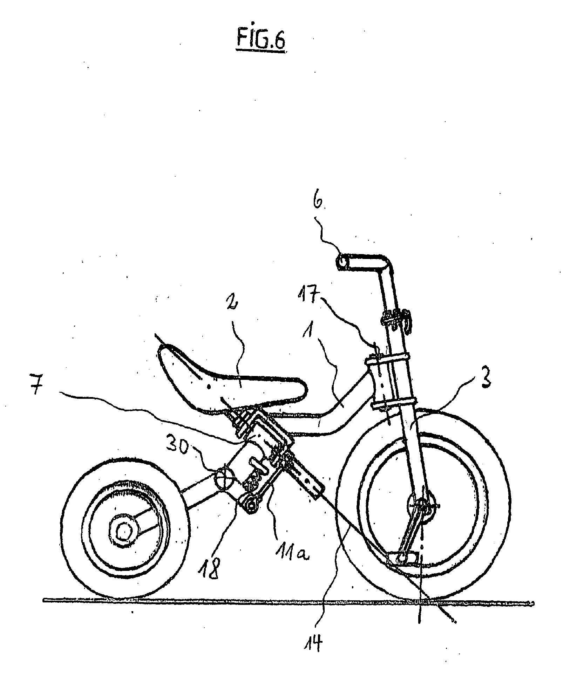

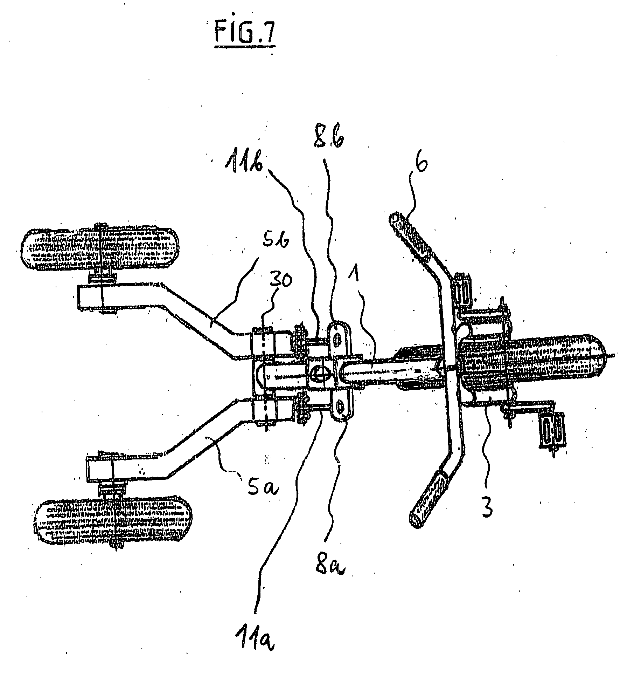

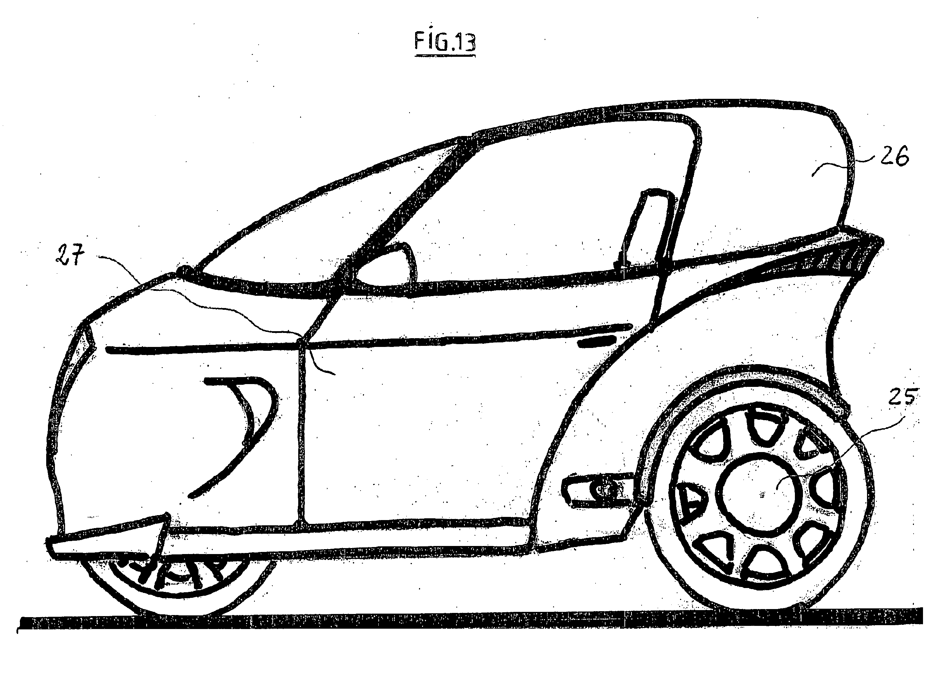

Aufgrund der einfachen mechanischen Steuerung der Neigetechnik können selbst Kinderfahrzeuge damit ausgerüstet werden, wie in Fig. 6 und 7 dargestellt. Genauso lassen sich beispielsweise mit Nabenmotoren 25 angetriebene Stadtfahrzeuge, die einen Wetterschutz 21 aufweisen, wie in Fig. 4 dargestellt, oder Fahrzeuge die mit Hardtop 26 und seitlicher Schiebetür 27 komplett geschlossen sind, wie in Fig. 13 gezeigt, damit ausrüsten. Derartige Fahrzeuge könnten sogar mit einem hinter oder vor dem Fahrersitz angeordneten Notsitz ergänzt werden.

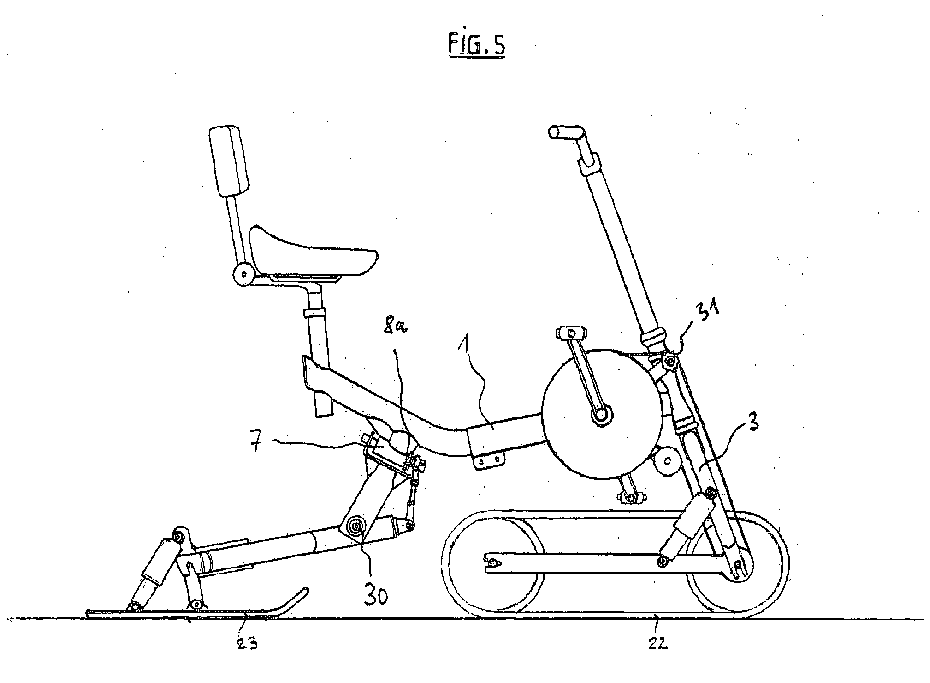

Das vorgestellte Dreirad lässt sich auch im Wintersport nutzen, wenn die Räder durch Schneeketten 22 oder Kufen 23 ersetzt werden, wie in Fig. 5 dargestellt.

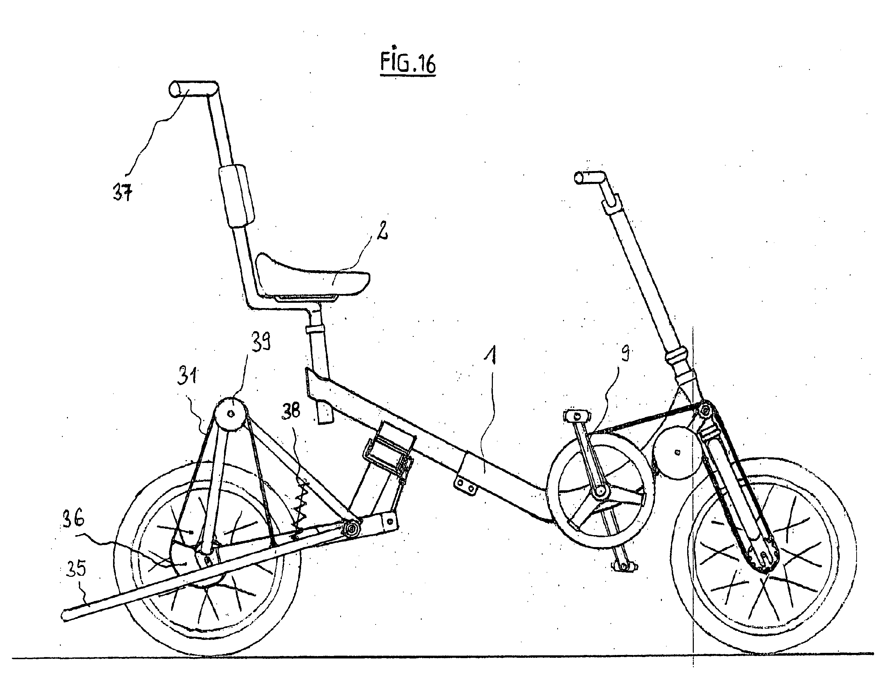

Darüber hinaus sind zu sportlichen Zwecken nutzbare Tandemfahrzeuge vorstellbar, bei denen sich der Beifahrer an einer am Fahrersitz 2 befestigten Haltestange 37 festhält und die Hinterräder mit einem Stepper antreibt, wie in Fig. 16 gezeigt. An der Außen- oder Innenseite jeder Hinterradschwinge 5a, 5b sind in diesem Fall mit Rückholfedern 38a, 38b ausgestattete Trittbretter 35a, 35b beweglich gelagert, welche vom Beifahrer abwechselnd links und rechts mit den Füßen nach unten gedrückt werden. Als Folge wird jeweils über einen Kettenzug 31a, 31b mit Umlenkrolle 39a, 39b ein spiralförmiges Kettenrad 36a, 36b, das einen Freilauf aufweist und an die Nabe eines der beiden Hinterräder geflanscht ist, gedreht. Nachdem das jeweilige Trittbrett 35a, 35b von der Rückholfeder 38a, 38b in die Ausgangsposition gezogen wurde, befindet sich auch das spiralförmige Kettenrad 36a, 36b wieder in der Ausgangsposition. So kann der Beifahrer mit dem Stepper die Hinterräder antreiben, während der Fahrer mit der Tretkurbel 9 das Vorderrad antreibt.

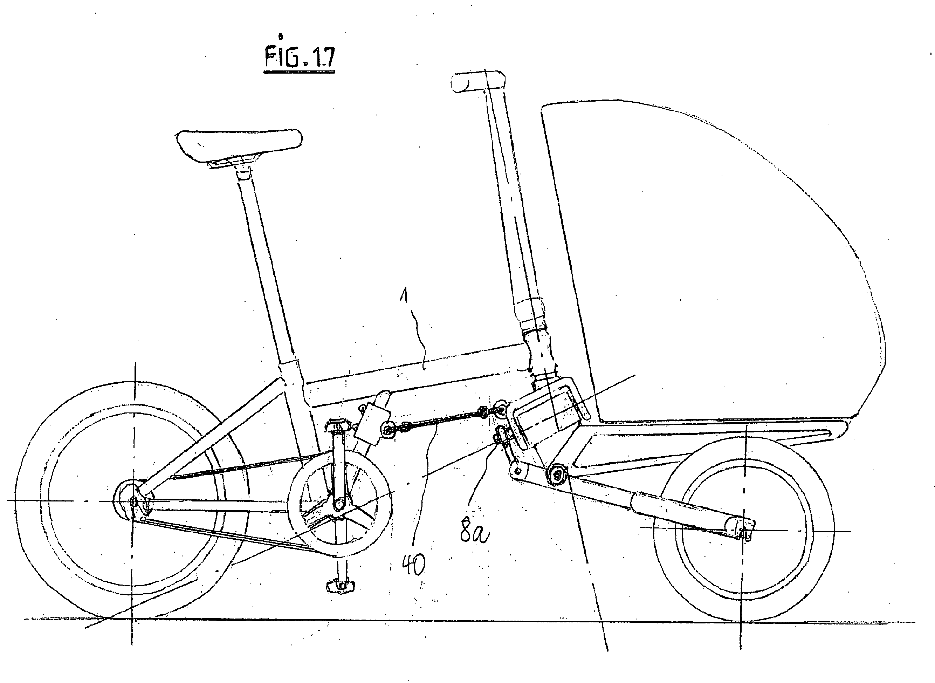

Grundsätzlich kann das Neigegelenk auch im Frontbereich eingesetzt werden, wie in Fig. 17 gezeigt, wobei ein Stahlseil 40 als Lenkungsdämpfer eingesetzt werden kann.

## Patentansprüche

1. Dreirädriges Fahrzeug mit einem Fahrzeugrahmen (1) und einem Fahrersitz (2) und zwei gegenläufig beweglichen Hinterradschwingen (5a, b),
**dadurch gekennzeichnet, dass** am Fahrzeugrahmen (1) unterhalb des Fahrersitzes (2) ein Lenkkopf (7) mit starren Mitnehmern (8a, b) angeordnet ist, der die Neigung des Fahrzeugrahmens (1) mit Steuerelementen an die gegenläufige Bewegung der Hinterradschwingen (5a, b) koppelt, um die Fahrzeugneigung zu steuern und eine Lenkung der Hinterräder zu bewirken.

2. Dreirädriges Fahrzeug nach Anspruch 1, wobei eine Drehachse (30) der gegenläufig beweglichen Hinterradschwingen (5a, 5b) zwischen Aufnahmelaschen (28a, 28b) von Steuerstangen (11a, 11b) und Hinterradaufnahmen (29a, 29b) angeordnet ist, wodurch eine seitliche Neigung des Fahrzeugrahmens (1) zu einer Aufwärtsbewegung eines kurveninneren Hinterrads führt.

3. Dreirädriges Fahrzeug nach Anspruch 2, wobei die Hinterradschwingen (5a, 5b) von der Drehachse (30) über die Aufnahmelaschen (28a, 28b) der Steuerstangen (11 a, 11 b) hinaus, mit einem Fußhebel (33a, 33b) verlängert sind, um Fußrasten (32a, 32b) aufzunehmen, mit denen die Steuerung der Auf- und Abwärtsbewegung der Hinterradschwingen (5a, 5b) unterstützbar ist.

4. Dreirädriges Fahrzeug nach einem der Ansprüche 1 bis 3 wobei am Fahrzeugrahmen (1) im Bereich hinter einer vertikalen Lenkachse (17) eines lenkbaren Vorderradträgers (3) eine Umlenkrolle (18) angeordnet ist, mit der der Kettentrieb eines manuell angetriebenen Vorderrads in Fahrtrichtung nach hinten umlenkbar ist, um eine tiefe Position des Tretlagers (24) zu erreichen.

5. Dreirädriges Fahrzeug nach einem der Ansprüche 1 bis 4, wobei an den Hinterradschwingen (5a, 5b) jeweils. Trittbretter (35a, 35b) mit Rückholfedern (38a, 38b) angeordnet sind, welche mittels Kettenzügen (31 a, 31 b) und spiralförmigen Kettenrädern (36a, 36b) die Hinterräder antreiben.

6. Dreirädriges Fahrzeug nach einem der Ansprüche 1 bis 5, wobei an dem im Bereich des Fahrersitzes (2) angeordneten Lenkkopf (7) Rückholfedern (18a, 18b) angeordnet sind, über welche die horizontale Lage des Fahrzeugs stabilisierbar ist, indem sie die Hinterradschwingen (5a, 5b) in eine ausgeglichene Mittellage zwingen.

7. Dreirädriges Fahrzeug nach einem der Ansprüche 1 bis 6, wobei zwischen dem im Bereich des Fahrersitzes (2) angeordneten Lenkkopf (7) und dem Fahrzeugrahmen (1) ein Zentralfederbein (19) gelenkig angeordnet ist.

8. Dreirädriges Fahrzeug nach einem der Ansprüche 1 bis 7, wobei der im Bereich des Fahrersitzes (2) angeordnete Lenkkopf (7) mit einem Hydraulikzylinder (13) versehen ist, mit dem die gegenläufige Bewegung der Hinterradschwingen (5a, 5b) zusätzlich steuerbar ist.

9. Dreirädriges Fahrzeug nach einem der Ansprüche 1 bis 8, wobei an dem im Bereich des Fahrersitzes (2) angeordneten Lenkkopf (7) eine Bremse (25) vorgesehen ist, mit der seine Drehbewegung blockierbar ist.

10. Dreirädriges Fahrzeug nach einem der Ansprüche 1 bis 9, wobei an den gegenläufig beweglichen Hinterradschwingen (5a, 5b) und am Vorderradträger Aufnahmebohrungen vorgesehen sind, an welchen Schneeketten (22) oder Kufen (23) montierbar sind.

11. Dreirädriges Fahrzeug nach einem der Ansprüche 1 bis 10, wobei am Fahrzeugrahmen (1) ein dachförmiger Wetterschutz (21) angeordnet ist.

12. Dreirädriges Fahrzeug nach einem der Ansprüche 1 bis 11, wobei der Lenkkopf (7) unterhalb des Fahrersitzes (2) vorgesehen ist.

## Claims

1. Three-wheel vehicle with a vehicle fame (1) and a driver's seat (2) and two oppositely moving rear swing arms (5a 5b), **characterized by** the fact that on the vehicle frame (1) beneath the driver's seat (2) there is a steering head (7) with fixed actuators (8a, b), which couples the tilt of the vehicle frame (1) with control elements to the oppositely moving rear swing arms (5a, b) for the purpose of being able to control the vehicle tilt and to permit steering of the back wheels.

2. Three-wheel vehicle according to Claim 1, whereby a pivot axle (30) of the oppositely moving rear swing arms (5a, 5b) is placed between the support brackets (28a, 28b) of the control rods (11a, 11b) and the rear wheel supports (29a, 29b), whereby a sideways tilt of the vehicle frame (1) results in an upwards movement of an inner curve rear wheeL

3. Three-wheel vehicle according to Claim 2, whereby the rear swing arms (5a, 5b) are extended from the pivot axle (30) past the support brackets (28a, 28b) of the control rods (11a, 11b) with a foot pedal (33a, 33b) for the purpose of incorporating footpegs (32a, 32b), with which one can support the control of the upward and downward movement of the rear swing arms (5a, 5b).

4. Three-wheel vehicle according to one of Claims 1 to 3, whereby on the vehicle frame (1) in the area behind the vertical steering axle (17) of a steerable front wheel carrier (3), a guide pulley (18) is placed, with which one can deflect the chain drive of a manually driven front wheel in a backward driving direction for the purpose of achieving a lower position of the bottom bracket (24).

5. Three-wheel vehicle according to one of Claims 1 to 4, whereby running boards (35a, 35b) with return springs (38a, 38b) are placed on the rear swing arms (spa, 5b), which can be used to drive the rear wheels by means of chain hoists (31a, 31b) and spiral sprocket wheels (36a, 36b).

6. Three-wheel vehicle according to one of Claims 1 to 5, whereby on the steering head (7) placed in the area of the driver's seat (2) there are return springs (18a, 18b) with which the horizontal tilt of the vehicle can be stabilized in that they force the rear swing arms (5a, 5b) into a balanced middle position.

7. Three-wheel vehicle according to one of Claims 1 to 6, whereby a central shock strut (19) has a hinged placement between the steering head (7) located in the area of the driver's seat (2) and the vehicle frame (1).

8. Three-wheel vehicle according to one of Claims 1 to 7, whereby the steering head (7) located in the area of the driver's seat (2) is equipped with a hydraulic cylinder (13), with which the opposite movement of the rear swing arms (5a, 5b) can additionally be controlled.

9. Three-wheel vehicle according to one of Claims 1 to 8, whereby on the steering head (7) located in the area of the driver's seat (2) there is a brake (25), with which its rotational movement can be blocked.

10. Three-wheel vehicle according to one of Claims 1 to 9, whereby on the oppositely moving rear swing arms (5a, 5b) and on the front wheel carrier there are drilled holes, where snow chains (22) or runners (23) can be mounted.

11. Three-wheel vehicle according to one of Claims 1 to 10, whereby a roof-like weather protection device (21) is placed on the vehicle frame (1).

12. Three-wheel vehicle according to one of Claims 1 to 11, whereby the steering head (7) is placed below the driver's seat (2).

## Revendications

1. Véhicule à trois roues avec un châssis-cadre (1) et un siège de conducteur (2) et deux bras oscillants de roue arrière (5a, b)se déplaçant de façon contrarotative, caractérisé en cela que sur le châssis-cadre (1) sous le siège du conducteur (2) se trouve une tête de direction (7) avec entraîneurs fixes (8a, b) qui couple l'inclinaison du châssis-cadre (1) avec les éléments de commande au mouvement contrarotatif des bras oscillants de roue arrière (5a, b) afin de contrôler l'inclinaison du véhicule et commander les roues arrière.

2. Véhicule à trois roues selon la revendication 1 pour lequel un axe rotatif (30) des bras oscillants de roue arrière au mouvement contrarotatif (5a, b) se trouve entre des languettes réceptrices (28a, 28b) de bielles de commande (11a, 11b) et les logements des roues arrière (29a, 29b), une inclinaison latérale du châssis-cadre (1) conduisant ainsi à un mouvement ascendant d'une roue arrière intérieure.

3. Véhicule à trois roues selon la revendication 2, pour lequel les bras oscillants de roue arrière (5a, 5b) de l'axe rotatif (30) sont prolongés au-dessus des languettes réceptrices (28a, 28b) des bielles de commande (11a, 11b) avec une pédale (33a, 33b) pour loger les repose-pieds (32a, 32b) avec lesquels la commande du mouvement ascendant et descendant des bras oscillants de roue arrière (5a, 5b) est entraînée.

4. Véhicule à trois roues selon l'une des revendications 1 à 3 pour lequel sur le châssis-cadre (1) derrière un axe de direction vertical (17) d'un support de roue avant dirigeable (3) se trouve un galet de guidage (18) avec lequel l'entraînement à chaîne d'une roue avant entraînée manuellement peut être dirigé vers l'arrière dans le sens de la marche afin d'atteindre une position profonde du pédalier (24).

5. Véhicule à trois roues selon l'une des revendications 1 à 4 pour lequel contre les bras oscillants de roue arrière (5a, 5b) se trouvent des marchepieds (35a, 35b) avec ressorts de rappel (38a, 38b) qui entraînent au moyen de palans à chaîne (31a, 31b) et de barbotins en forme de spirale (36a, 36b) les roues arrière.

6. Véhicule à trois roues selon l'une des revendications 1 à 5 pour lequel contre la tête de direction (7) se trouvant dans la zone du siège conducteur (2) se trouvent des ressorts de rappel (18a, 18b) permettant de stabiliser la position horizontale du véhicule en contraignant les bras oscillants de roue arrière (5a, 5b) dans une position médiane équilibrée.

7. Véhicule à trois roues selon l'une des revendications 1 à 6 pour lequel entre la tête de direction (7) se trouvant dans la zone du siège conducteur (2) et le châssis-cadre (1) se trouve une jambe amortisseuse centrale (19) télescopique.

8. Véhicule à trois roues selon l'une des revendications 1 à 7 pour lequel la tête de direction (7) se trouvant dans la zone du siège conducteur (2) est pourvue d'un vérin hydraulique (13) avec lequel le mouvement contrarotatif des bras oscillants de roue arrière (5a, 5b) peut être commandé en plus.

9. Véhicule à trois roues selon l'une des revendications 1 à 8 pour lequel contre la tête de direction (7) se trouvant dans la zone du siège conducteur (2) un frein (25) est prévu permettant de bloquer son mouvement de rotation.

10. Véhicule à trois roues selon l'une des revendications 1 à 9 pour lequel contre les bras oscillants de roue arrière à mouvement contrarotatif (5a, 5b) et contre le support de roue avant des alésages sont prévus sur lesquels des chaînes à neige (22) ou des patins (23) peuvent être montés.

11. Véhicule à trois roues selon l'une des revendications 1 à 10 pour lequel contre le châssis-cadre (1) se trouve une protection contre les intempéries (21) en forme de toit.

12. Véhicule à trois roues selon l'une des revendications 1 à 11 pour lequel la tête de direction (7) est prévue sous le siège conducteur (2).
